# FASCICULE DE BREVET EUROPEEN

(11) **EP 3 036 246 B1**
(45) Date de publication et mention de la délivrance du brevet: **25.01.2017**
(21) Numéro de dépôt: 14753273.3
(22) Date de dépôt: 22.08.2014
(51) Int. Cl.: C07F 9/40, H01M 10/052, H01M 10/0569

(54) **COMPOSES FLUORES UTILISABLES COMME SOLVANT ORGANIQUE POUR SELS DE LITHIUM**
FLUORIERTE VERBINDUNGEN ZUR VERWENDUNG ALS ORGANISCHES LÖSUNGSMITTEL FÜR LITHIUMSALZE
FLUORATED COMPOUNDS USABLE AS AN ORGANIC SOLVENT FOR LITHIUM SALTS

(30) Priorité: 23.08.2013 FR 1358152
(43) Date de publication de la demande: 29.06.2016
(73) Titulaire: Commissariat à l'Énergie Atomique et aux Énergies Alternatives, 75015 Paris (FR); Ecole Nationale Supérieure de Chimie de Montpellier, 34296 Montpellier Cedex 5 (FR); Centre National de la Recherche Scientifique, 75016 Paris (FR)
(72) Inventeur: GALIANO, Hervé, F-37700 La Ville Aux Dames (FR); CADRA, Stéphane, F-37550 Saint Avertin (FR); PIERRE, Nathalie, F-37260 Monts (FR); AMEDURI, Bruno, F-34000 Montpellier (FR); ALAAEDDINE, Ali, Beyrouth (LB)
(74) Mandataire: Brevalex
(86) Numéro de dépôt international: PCT/EP2014/067936
(87) Numéro de publication internationale: WO 2015/025045

(56) Documents cités:
- WO-A1-2011/051275

## Description

### DOMAINE TECHNIQUE

La présente invention a trait à des composés fluorés, à leur procédé de préparation ainsi qu'à leur utilisation en tant que solvants aptes, en particulier, à permettre la dissolution de sels de lithium.

C'est donc ainsi tout naturellement que ces composés peuvent trouver application dans le domaine des électrolytes, et notamment des électrolytes destinés à entrer dans la constitution des batteries au lithium.

Les batteries au lithium sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

D'un point de vue fonctionnel, les batteries au lithium reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Ces électrolytes peuvent consister en un mélange comprenant au moins un solvant organique et au moins un sel de lithium pour assurer la conduction desdits ions lithium, ce qui nécessite que le sel de lithium soit dissous dans ledit solvant organique.

Actuellement, les solvants organiques utilisés pour assurer cette fonction sont classiquement des solvants carbonates, tels que le carbonate d'éthylène, le carbonate de diméthyle, le carbonate de diéthyle.

Il est également décrit, dans WO 2011/051275, des solvants d'électrolyte utilisables dans des batteries lithium-soufre et, plus spécifiquement, des composés phosphonates fluorosubstitués comme une alternative envisageable parmi une longue liste d'autres types de composés. Plus précisément, des composés phosphonates fluorosubstitués spécifiques décrits dans ce document sont ceux de la page 9, lignes 19-26, lesquels répondent à la formule générale suivante :

R-P(O)R¹R²

dans laquelle :
- R est un groupe alkyle en C₁ à C₄ ; un groupe alkyle en C₁ à C₄, substitué par au moins un atome de fluor ou un groupe alcoxy en C₂ à C₄ fluorosubstitué ;
-R¹ et R², identiques ou différents, représentent des groupes alcoxy en C₂ à C₄ substitués par au moins un atome de fluor.

En particulier, des exemples de tels composés sont le méthyl bis-(2,2,2-trifluoroéthyl) phosphonate de formule CH₃-PO(OCH₂CF₃), l'éthyl bis-(2,2,2-trifluoroéthyl)phosphonate deformule CH₃-CH₂-PO(OCH₂CF₃)₂.

Les inventeurs de la présente invention se sont proposé de mettre au point de nouveaux composés qui présentent les caractéristiques suivantes :
- une capacité à dissoudre facilement les sels de lithium ;
- une bonne stabilité électrochimique ;
- une bonne inertie thermique et chimique ; et
- une capacité à diminuer l'inflammabilité des électrolytes, dans lesquels ils sont incorporés.

### EXPOSÉ DE L'INVENTION

Ainsi, l'invention a trait à des composés fluorés de formule (I) suivante : 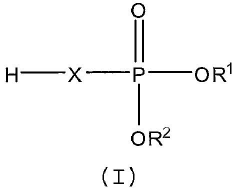 dans laquelle :
*X correspond à un motif de formule (II) suivante : 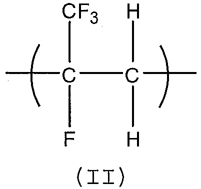 ou à un enchaînement dudit motif de formule (II),
*R¹ et R² représentent, indépendamment l'un de l'autre, un groupe alkyle.

Avant d'entrer plus en détail dans la description, nous précisons les définitions suivantes.

Par groupe alkyle, on entend, classiquement, dans ce qui précède et ce qui suit, un groupe alkyle, linéaire ou ramifié, de formule -CₙH₂ₙ₊₁, n correspondant au nombre d'atomes de carbone, ce nombre pouvant aller de 1 de 5. En particulier, il peut s'agir d'un groupe méthyle, d'un groupe éthyle, d'un groupe n-propyle, d'un groupe n-butyle, d'un groupe n-pentyle, d'un groupe n-hexyle, d'un groupe isopropyle, d'un groupe tert-butyle et d'un groupe néopentyle.

Par enchaînement dudit motif de formule (II), on entend le fait que ledit motif est répété plusieurs fois, de sorte à former un groupe formant pont entre l'atome d'hydrogène et le groupe -P(O)(OR¹)(OR²) ledit groupe formant pont pouvant ainsi être représenté par la formule (III) suivante : 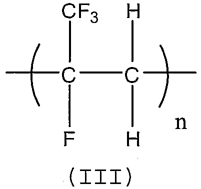 n correspondant au nombre de répétition du motif pris entre parenthèses, n étant un entier supérieur à 1.

Pour éviter toute ambiguïté, nous précisons enfin, de façon plus explicite que :
- lorsque X correspond à un motif de formule (II), les composés de l'invention peuvent être représentés par la formule chimique (IV) suivante : 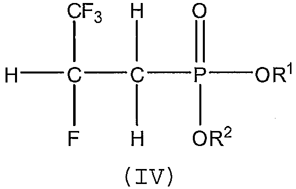
- lorsque X correspond à un enchaînement dudit motif de formule (II), les composés de l'invention peuvent être représentés par la formule chimique (V) suivante :

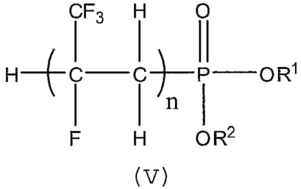

n correspondant au nombre de répétition du motif pris entre parenthèses, n étant supérieur à 1, par exemple, pouvant aller jusqu'à 10 et plus précisément pouvant aller de 2 à 4.

Des composés spécifiques conformes à invention sont ceux répondant aux formules (VI) et (VII) suivantes :

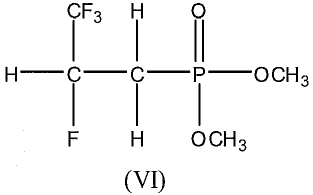

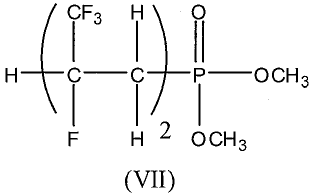

Les composés fluorés de l'invention peuvent être préparés par la mise en oeuvre d'un procédé comprenant une étape de mise en contact, en présence d'un amorceur de radicaux libres, d'un monomère de formule (VIII) suivante : 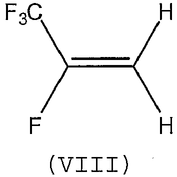 et d'un composé dialkylphosphite de formule (IX) suivante : 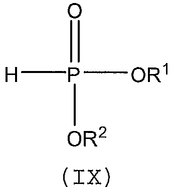 dans laquelle R¹ à R² sont tels que définis ci-dessus.

L'amorceur de radicaux libres peut être défini comme un composé ayant l'aptitude à se décomposer thermiquement en générant des radicaux libres. Les radicaux libres ainsi formés vont se combiner à une espèce réactive présente dans le mélange réactionnel, tel que le composé de formule (IX) définie ci-dessus. Cette combinaison va générer une nouvelle entité radicalaire phosphonée, qui va, à son tour, s'associer à une nouvelle espèce réactive, en l'occurrence ici, le monomère de formule (VIII). Cette association va générer une nouvelle entité radicalaire, qui va se recombiner de nouveau avec un monomère de formule (VIII), entretenant ainsi une réaction en chaîne jusqu'à épuisement de toutes les entités réactives présentes dans le mélange réactionnel.

Un amorceur de radicaux libres efficace dans le cadre de ce procédé peut être choisi parmi les dérivés peroxydes, tels que le di-*tert*-butylperoxyde, le peroxyde de benzoyle, le peroxyde de *tert*-butyle, le 2,5-di-*tert*-butyldiméthylperoxyde d'hydrogène.

L'amorceur de radicaux libre peut être également choisi parmi les dérivés persulfates, les dérivés percarbonates, les peroxydicarbonates.

L'étape de mise en contact est réalisée, de préférence, en présence d'un solvant polaire aprotique, apte à solubiliser les différents constituants du mélange réactionnel, lequel solvant peut être choisi parmi les solvants suivants :
- le diméthylformamide (symbolisé par l'abréviation DMF) ;
- un composé nitrile, tel que l'acétonitrile, le propionitrile, le butyronitrile, le valéronitrile et l'isovaléronitrile ;
- un composé hydrocarboné cyclique ou acyclique, tel que le pentane, l'hexane, le cyclohexane et l'heptane ;
- un solvant halogéné, tel que le 1,1,2-trifluoro-1,2,2-trichloroéthane, le 1,1,1,3,3-pentafluorobutane, le perfluorohexane, le perfluoroheptane, le perfluorobenzène, le perfluoro-1-butyltétrahydrofurane ;
- un composé éther cyclique, tel que le tétrahydrofurane (symbolisé par l'abréviation THF) et le 2-méthyltétrahydrofurane ;
- un composé pyrrolidone, tel que la N-méthyl-2-pyrrolidone, la N-éthylpyrrolidone ;
- le carbonate de diméthyle ; et
- les mélanges de ceux-ci.

Dans le cas où le ou les monomères utilisés se présente(nt) sous forme gazeuse et que l'étape de mise en contact est réalisée sous pression, celle-ci peut être mise en oeuvre dans un autoclave.

Pour les composés phosphites de formule (IX) suivante, R¹ et R² peuvent correspondre à un groupe méthyle, auquel cas le composé est le phosphite de diméthyle (appelé également hydrogénophosphonate de diméthyle). R¹ et R² peuvent correspondre, également, à un groupe éthyle, un groupe n-propyle, un groupe n-butyle, un groupe n-pentyle, un groupe n-hexyle, un groupe isopropyle, un groupe tert-butyle, un groupe néopentyle.

Après l'étape de mise en contact, le procédé peut comprendre une étape d'isolement du composé du milieu réactionnel, cette étape d'isolement pouvant consister en une distillation fractionnée du mélange réactionnel.

Les composés selon l'invention disposent de propriétés particulières, telles qu'une température de fusion sub-ambiante (par exemple, inférieure à 0°C), une aptitude à dissocier les entités ioniques (du fait notamment d'une constante diélectrique, qui peut être supérieure à 20) et une inertie chimique vis-à-vis des sels de lithium.

C'est donc tout naturellement qu'ils trouvent leur application comme solvant organique pour au moins un sel de lithium, ce solvant organique pouvant entrer dans la constitution d'un électrolyte comprenant au moins un sel de lithium destiné à une batterie au lithium.

Ainsi, l'invention a également trait à :
- l'utilisation d'un composé fluoré tel que défini ci-dessus comme solvant organique d'au moins un sel de lithium ;
- une composition, plus spécifiquement une composition liquide, qui peut être un électrolyte conducteur d'ions lithium, comprenant au moins un composé fluoré tel que défini ci-dessus et au moins un sel de lithium ; et
- une batterie au lithium comprenant au moins une cellule électrochimique comprenant un électrolyte tel que défini ci-dessus disposé entre une électrode positive et une électrode négative.

A titre d'exemples, le sel de lithium peut être choisi dans le groupe constitué par LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium (connu sous l'abréviation LiTFSI) LiN[SO₂CF₃]₂ et les mélanges de ceux-ci.

Dans la batterie au lithium, l'électrolyte liquide susmentionné peut être amené, dans les cellules électrochimiques des batteries au lithium, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte est composé d'au moins un sel de lithium et d'au moins un solvant organique, ce dernier pouvant être uniquement constitué d'un ou plusieurs composés de formule (I) conformes à l'invention ou pouvant comprendre, en outre, au moins un autre solvant aprotique, tel que du carbonate de diméthyle du carbonate de diéthyle, du carbonate d'éthyle et de méthyle, du carbonate d'éthylène et du carbonate de propylène.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Généralement, l'électrode négative peut être à base d'un matériau actif qui peut être un matériau carboné, tel que du graphite, ou un matériau du type oxyde de type Li₄Ti₅O₁₂, ledit matériau pouvant être associé à un liant polymère tel que du polyfluorure de vinylidène, le mélange résultant pouvant être déposé sur un collecteur de courant, par exemple, en aluminium.

L'électrode positive, quant à elle, peut être à base d'un matériau actif du type oxyde de métal de transition lithié (le métal pouvant être, par exemple, du cobalt, du nickel, du manganèse, du fer), ledit matériau pouvant être associé à un liant polymère, tel que du polyfluorure de vinylidène, le mélange résultant pouvant être déposé sur un collecteur de courant, par exemple, en aluminium.

L'invention va maintenant être décrite, en référence aux exemples suivants, donnés à titre indicatif et non limitatif.

### EXPOSÉ DÉTAILLÉ DE MODES DE RÉALISATION PARTICULIERS

### EXEMPLE 1

L'exemple qui suit illustre la préparation de deux composés fluorés conformes à l'invention selon le schéma réactionnel suivant :

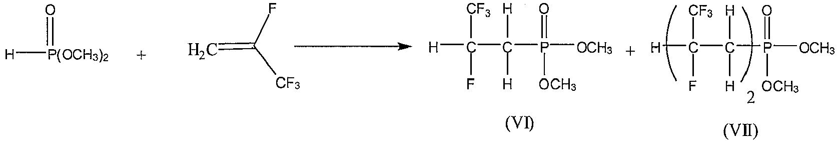

Le monomère 1,1,1,2-tétrafluoroprop-2-ène est à l'état gazeux. De ce fait, la mise en commun des réactifs est réalisée dans un autoclave de 300 mL Parr Hastelloy équipé d'un manomètre, d'un disque de rupture et de vannes d'introduction des gaz et de relargage. Un dispositif électronique permet de contrôler à la fois l'agitation et le chauffage de l'autoclave.

Avant la réaction, l'autoclave est pressurisé à 30 bars d'azote pendant 1 heure pour vérifier l'étanchéité de celui-ci. L'autoclave est ensuite dépressurisé pendant 40 minutes (jusqu'à moins de 5 mbar) puis les réactifs suivants sont introduits :
- le phosphite de diméthyle (86,08 g ; 0,782 mol) ;
- le peroxyde de di-tert-butyle (0,761 g ; 5,2 mmol) ; et
- l'acétonitrile (80 g).

Une fois ces réactifs ajoutés, l'autoclave est refroidi à -20°C par immersion dans un mélange d'acétone et d'azote liquide puis le 1,1,1,2-tétrafluoroprop-2-ène (30 g ; 0,260 mol) est introduit.

L'autoclave est ensuite chauffé progressivement jusqu'à 140°C et l'évolution de la pression et de la température a été enregistrée. Au cours de la réaction, une augmentation de la pression à l'intérieur du réacteur est observée (jusqu'à 12 bars). La température atteint 151°C. Une heure après l'exothermie, la pression a diminué jusqu'à 3 bars pour une température maintenue à 140°C. L'autoclave est ensuite refroidi (par immersion pendant 30 minutes dans un bain de glace) puis dégazé. Après ouverture de l'autoclave, le résidu liquide est recueilli.

Ensuite, le mélange réactionnel brut est soumis à une distillation fractionnée sous vide (0,08 mbar), afin de séparer les différents produits de la réaction en fonction de leur point d'ébullition. Ainsi, les composés présentant la masse molaire la plus importante présenteront le point d'ébullition le plus élevé. Chaque fraction isolée est ensuite redistillée pour conduire au produit pur.

Les produits isolés se présentent sous forme de liquides incolores. Il s'agit du monoadduit 2,3,3,3-tétrafluoropropylephosphonate de diméhyle (intitulé ci-dessous composé de formule (VI)) et du diadduit 2,4,5,5,5-pentafluoro-2-(trifluorométhyl)pentylephosphonate de diméthyle (intitulé ci-dessous composé de formule (VII)).

Le composé de formule (VI) a été récupéré à hauteur de 4,2 g (soit 7% de rendement.

Il a été analysé respectivement par RMN ¹H (CDCl₃) et par RMN ³¹P (CDCl₃).

Le spectre RMN ¹H (CDCl₃) du composé 4 présente trois signaux :
- un multiplet situé à 2,0-2,5 ppm attribué aux deux hydrogènes du méthylène central;
- un multiplet situé à 3,7 ppm attribué aux six hydrogènes des deux groupes méthoxy terminaux;
- un doublet de multiplet à 4,9-5,1 ppm présentant une constante de couplage de 50 Hz et correspondant à l'hydrogène terminal.

Le spectre RMN ³¹P (CDCl₃) présente un seul signal à 25,4 ppm sous forme d'un triplet avec une constante de couplage J_{PF}=30 Hz.

Le composé de formule (VII) a été récupéré à hauteur de 6 g (soit 13,6 % de rendement).

Il a été analysé respectivement par RMN ¹H (CDCl₃) et RMN ¹³C (CDCl₃).

Le spectre RMN ¹H (CDCl₃) du composé 4 présente trois signaux :
- un multiplet situé à 2,2 -2,9 ppm attribué aux quatre hydrogènes des deux groupes méthylènes ;
- un multiplet situé à 3,7 ppm attribué aux six hydrogènes des deux groupes méthoxy terminaux;
- un triplet de multiplet à 5,0-5,1 ppm présentant une constante de couplage de 35 Hz et correspondant à l'hydrogène terminal.

Le spectre RMN ³¹P (CDCl₃) présente un seul signal à 22,3 ppm sous forme d'un triplet avec une constante de couplage J_{PF}=30 Hz.

### EXEMPLE 2

Afin d'évaluer l'intérêt des composés de l'invention pour une application en électrolyte, différentes propriétés physico-chimiques ont été déterminées. Leurs points de fusion (avec et sans LiPF₆), leurs constantes diélectriques et leurs compatibilités vis-à-vis du sel LiPF₆ ont été évalués et sont présentés dans le tableau suivant. Par compatibilité vis-à-vis de LiPF₆, il est entendu que le composé de l'invention doit parfaitement solubiliser le sel de lithium, lorsque celui-ci est introduit jusqu'à une concentration de 1 mol/L (soit 1 M) et que la coloration de la solution générée n'évolue pas dans le temps, c'est-à-dire reste limpide durant 24 heures à température ambiante. Il est précisé qu'un solvant d'intérêt pour un électrolyte doit être à la fois compatible vis-à-vis du sel conducteur (ici, LiPF₆), doit disposer d'une constante diélectrique supérieure à 20 et d'une température de fusion sub-ambiante.

| | Composé de formule (VI) | Composé de formule (VII) |
|---|---|---|
| Constante diélectrique | 25,9 | 21,6 |
| Point de fusion | < -80°C | < -80°C |
| Compatibilité LiPF₆ | Compatible | Compatible |
| Point de fusion (1M LiPF₆) | < -80°C | -75,3 °C |

## Revendications

1. Composé de formule (I) suivante : 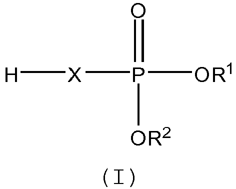 dans laquelle :
*X correspond à un motif de formule (II) suivante : 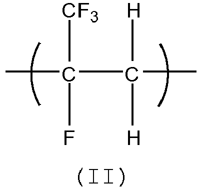 ou à un enchaînement dudit motif de formule (II),
*R¹ et R² représentent, indépendamment l'un de l'autre, un groupe alkyle.

2. Composé selon la revendication 1, qui répond à la formule (V) suivante : 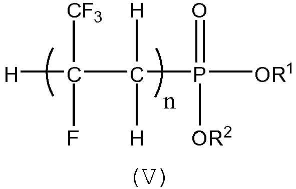 n correspondant au nombre de répétition du motif pris entre parenthèses, n étant supérieur à 1.

3. Composé selon la revendication 2, dans lequel n est un entier allant de 2 à 4.

4. Composé selon l'une quelconque des revendications précédentes, qui répond à la formule (VI) suivante :

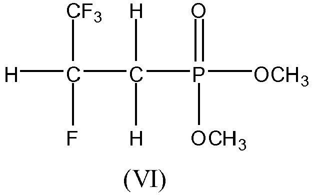

5. Composé selon l'une quelconque des revendications précédentes, qui répond à la formule (VII) suivante :

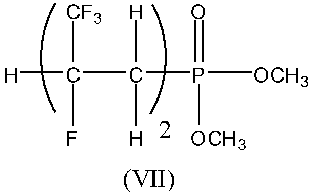

6. Procédé de préparation d'un composé fluoré de formule (I) suivante : 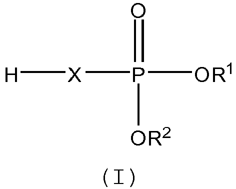 dans laquelle :
*X correspond à un motif de formule (II) suivante : 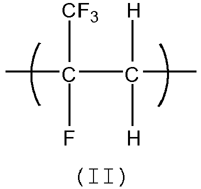 ou à un enchaînement dudit motif de formule (II),
*R¹ et R² représentent, indépendamment l'un de l'autre, un groupe alkyle,
lequel procédé comprenant une étape de mise en contact, en présence d'un amorceur de radicaux libres, d'un monomère de formule (VIII) suivante : 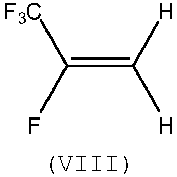 et d'un composé dialkylphosphite de formule (IX) suivante : 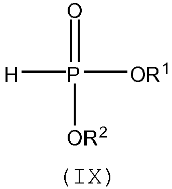 dans laquelle R¹ à R² sont tels que définis ci-dessus.

7. Utilisation d'un composé tel que défini selon l'une quelconque des revendications 1 à 5 comme solvant organique d'au moins un sel de lithium.

8. Composition comprenant au moins un composé tel que défini selon l'une quelconque des revendications 1 à 5 et au moins un sel de lithium.

9. Composition selon la revendication 8, qui est un électrolyte conducteur d'ions lithium.

10. Batterie au lithium comprenant au moins une cellule électrochimique comprenant un électrolyte tel que défini à la revendication 9 disposé entre une électrode positive et une électrode négative.

## Patentansprüche

1. Verbindung mit der folgenden Formel (I): 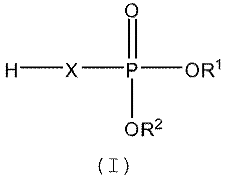 bei welcher:
*X einer Einheit der folgenden Formel (II) entspricht: 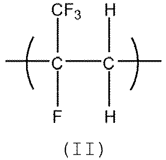 oder einer Kette der Einheit der Formel (II),
*R¹ und R² unabhängig voneinander eine Alkylgruppe sind.

2. Verbindung nach Anspruch 1, die der folgenden Formel (V) entspricht: 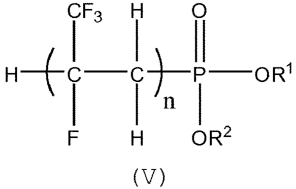 wobei
n der Wiederholungszahl der Einheit in Klammern entspricht und n größer 1 ist.

3. Verbindung nach Anspruch 2, bei welcher n eine ganze Zahl von 2 bis 4 ist.

4. Verbindung nach einem der vorangehenden Ansprüche, die der folgenden Formel (VI) entspricht:

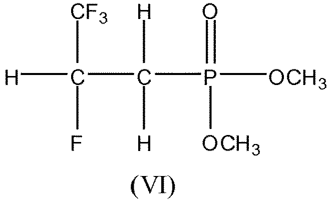

5. Verbindung nach einem der vorangehenden Ansprüche, die der folgenden Formel (VII) entspricht:

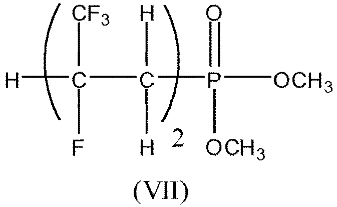

6. Zubereitungsmethode für eine fluorierte Verbindung mit der folgenden Formel (I): 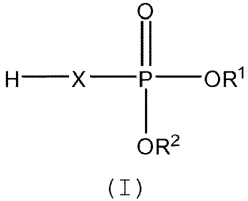 bei welcher:
*X einer Einheit der folgenden Formel (II) entspricht: 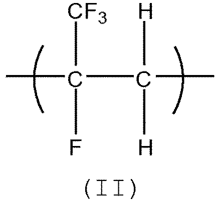 oder einer Kette der Einheit der Formel (II),
*R¹ und R² unabhängig voneinander eine Alkylgruppe sind,
wobei die Methode in Anwesenheit eines Radikalstarters einen Schritt der Zusammenführung eines Monomers mit der folgenden Formel (VIII) 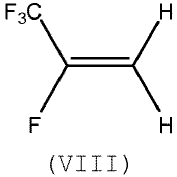 und einer Dialkylphosphit-Verbindung mit der folgenden Formel (IX) 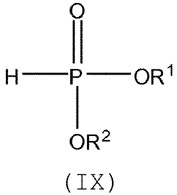 umfasst, bei welcher R¹ und R² wie oben beschrieben definiert sind.

7. Verwendung einer Verbindung gemäß der Beschreibung in den Ansprüchen 1 bis 5 als organisches Lösungsmittel wenigstens eines Lithiumsalzes.

8. Zusammensetzung, welche wenigstens eine Verbindung gemäß der Beschreibung in einem der Ansprüche 1 bis 5 umfasst und wenigstens ein Lithiumsalz.

9. Zusammensetzung nach Anspruch 8, welche ein lithiumionenleitender Elektrolyt ist.

10. Lithiumbatterie, welche wenigstens eine elektrochemische Zelle umfasst, die einen Elektrolyten gemäß der Beschreibung in Anspruch 9 umfasst, der zwischen einer positiven Elektrode und einer negativen Elektrode angeordnet ist.

## Claims

1. A compound of following formula (I): 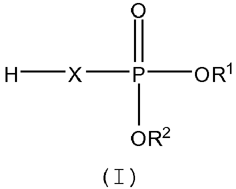 where:
*X corresponds to a repeat unit of following formula (II): 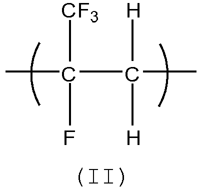 or to a sequence of said repeat unit of formula (II),
*R¹ and R² are each independently an alkyl group.

2. The compound according to claim 1 which meets following formula (V): 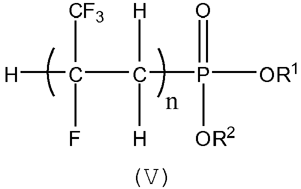 n corresponding to the number of repeats of the repeat unit between brackets, n being higher than 1.

3. The compound according to claim 2 wherein n is an integer ranging from 2 to 4.

4. The compound according to any of the preceding claims which meets following formula (VI):

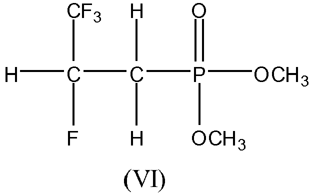

5. The compound according to any of the preceding claims which meets following formula (VII):

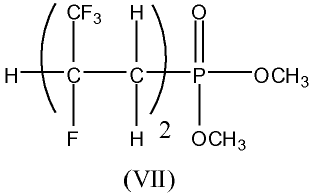

6. A method to prepare a fluorinated compound of following formula (I): 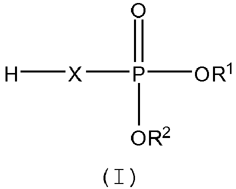 where:
*X corresponds to a repeat unit of following formula (II): 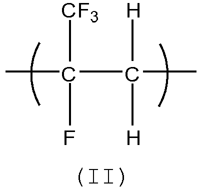 or to a sequence of said repeat unit of formula (II),
*R¹ and R² are each independently an alkyl group,
this method comprising a contacting step, in the presence of a free radical initiator, between a monomer of following formula (VIII): 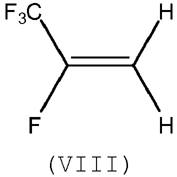 and a dialkylphosphite compound of following formula (IX) : 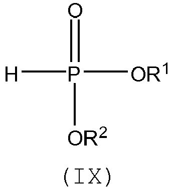 where R¹ to R² are such as defined above.

7. The use of a compound such as defined according to any of claims 1 to 5 as organic solvent of at least one lithium salt.

8. A composition comprising at least one compound such as defined according to any of claims 1 to 5 and at least one lithium salt.

9. The composition according to claim 8 which is a lithium ion-conducting electrolyte.

10. A lithium battery comprising at least one electrochemical cell comprising an electrolyte such as defined in claim 9 arranged between a positive electrode and a negative electrode.
